(19) Europäisches Patentamt / European Patent Office / Office européen des brevets

(11) **EP 4 664 554 A1**

(12) **EUROPEAN PATENT APPLICATION**
published in accordance with Art. 153(4) EPC

(43) Date of publication:
**17.12.2025 Bulletin 2025/51**

(21) Application number: **25758494.6**

(22) Date of filing: **07.01.2025**

(51) International Patent Classification (IPC):
$H01M\ 4/36$ (2006.01)  $H01M\ 4/58$ (2010.01)
$H01M\ 10/54$ (2006.01)  $H01M\ 10/052$ (2010.01)
$G01N\ 21/65$ (2006.01)  $H01M\ 4/02$ (2006.01)

(52) Cooperative Patent Classification (CPC):
G01N 21/65; H01M 4/02; H01M 4/36; H01M 4/58;
H01M 10/052; H01M 10/54; Y02E 60/10;
Y02W 30/84

(86) International application number:
**PCT/KR2025/000308**

(87) International publication number:
**WO 2025/178245 (28.08.2025 Gazette 2025/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.02.2024  KR 20240025873**

(71) Applicant: **LG Energy Solution, Ltd.
Seoul 07335 (KR)**

(72) Inventors:
• **CHOI, Jeong Mi
  Daejeon 34122 (KR)**

• **PARK, Se Ho
  Daejeon 34122 (KR)**
• **LEE, Jeongbae
  Daejeon 34122 (KR)**
• **KIM, Yeon Jun
  Daejeon 34122 (KR)**
• **SEO, Yongsik
  Daejeon 34122 (KR)**
• **PARK, Gwangseon
  Daejeon 34122 (KR)**

(74) Representative: **Hoffmann Eitle
Patent- und Rechtsanwälte PartmbB
Arabellastraße 30
81925 München (DE)**

(54) **POSITIVE ELECTRODE ACTIVE MATERIAL, METHOD FOR REGENERATING POSITIVE ELECTRODE ACTIVE MATERIAL, AND SECONDARY BATTERY**

(57) The present invention relates to a cathode active material, a method of recycling a cathode active material, and a secondary battery. According to the present invention, by desorbing and recovering a cathode active material from a waste cathode, applying a coating agent thereto, and controlling the calcination conditions of the coating agent-coated cathode active material, a structure similar to the crystal structure of the fresh cathode active material may be obtained, and the area where an olivine structure compound is mixed within a carbon coating layer on the surface of the cathode active material may be reduced. Accordingly, excellent battery characteristics may be provided.

[FIG. 1]

## Description

[Technical Field]

[Cross-Reference to Related Applications]

This application claims priority to Korean Patent Application No. 10-2024-0025873, filed on February 22, 2024, and Korean Patent Application No. 10-2025-0001944, re-filed on January 7, 2025, based on the priority of the above patent, in the Korean Intellectual Property Office, the disclosures of each of which are incorporated herein by reference.

The present invention relates to a cathode active material, a method of recycling a cathode active material, and a secondary battery. According to the present invention, by desorbing and recovering a cathode active material from a waste cathode, applying a coating agent thereto, and controlling the calcination conditions of the coating agent-coated cathode active material, a structure similar to the crystal structure of the fresh cathode active material may be obtained, and the area where an olivine structure compound is mixed within a carbon coating layer on the surface of the cathode active material may be reduced. Accordingly, excellent battery characteristics may be provided.

[Background Art]

The demand for lithium secondary batteries has been continuously increasing along with the portable electronic device market since the 1990s. Recently, with the rapid growth of the electric vehicle market, the demand for lithium secondary batteries is rapidly increasing worldwide. This increase in demand for lithium secondary batteries could lead to instability in the supply and demand of lithium resources in the near future. In addition, the continuous accumulation of waste batteries could cause major environmental problems. To solve these problems, recycling of waste lithium secondary batteries is a very important technological challenge.

In general, a lithium secondary battery consists of a cathode formed by coating a metal foil, such as aluminum, with a cathode active material layer; an anode formed by coating a metal foil, such as copper, with an anode active material layer; a separator for preventing mixing of the cathode and anode; and an electrolyte solution that allows lithium ions to move between the cathode and anode. The cathode is manufactured by applying a cathode composition including a cathode active material, a binder, a conductive material, and a solvent to a current collector made of a metal foil such as aluminum, performing drying, and then performing pressure forming.

The cathode accounts for 60 % or more of the cost of a lithium secondary battery. The active materials of these cathodes include lithium cobalt oxide ($LiCoO_2$), lithium nickel cobalt manganese oxide ($LiNiMnCoO_2$), lithium manganese oxide ($LiMnO_2$), and lithium iron phosphate ($LiFePO_4$). Thereamong, lithium iron phosphate is increasingly being used as a raw material for largecapacity lithium secondary batteries used in electric vehicles due to the low unit price and stable supply thereof. Accordingly, various studies are being conducted on recycling processing technology to selectively recover valuable metals from cathodes of lithium secondary batteries that are discarded after use or cathode scraps generated during the lithium secondary battery manufacturing process (hereinafter referred to as "waste cathodes"), or to directly recover cathode active materials.

However, due to the characteristics of recycled cathode active material, particle size distribution is uneven and the crystal structure is not stable. Accordingly, particles may easily break and fine particles may easily occur during the electrode manufacturing process. In addition, thermal stability may be reduced, which may deteriorate battery performance, such as lifespan characteristics, in a high-voltage environment.

Therefore, there is a need to develop a technology to recycle cathode active materials that can provide excellent battery characteristics when applied to secondary batteries.

[Related Art Documents]

[Patent Documents]

Japanese Application Publication No. 2024-503575

[Disclosure]

[Technical Problem]

Therefore, the present invention has been made in view of the above problems, and it is one object of the present invention to provide a cathode active material and a secondary battery including the same. According to the present invention, by desorbing and recovering a cathode active material from a waste cathode, applying a coating agent thereto, and controlling the calcination conditions of the coating agent-coated cathode active material, a structure similar to the crystal structure of the fresh cathode active material may be obtained, and the area where an olivine structure compound is mixed within a carbon coating layer on the surface of the cathode active material may be reduced. Accordingly, excellent battery characteristics may be provided.

It is another object of the present invention to provide a cathode active material and a secondary battery including the same. According to the preset invention, lifespan characteristics may be excellent in a high-voltage environment, thermal stability may be increased, and the amount of gas generated during charging and discharging may be reduced.

The above and other objects can be accomplished by the present invention described below.

[Technical Solution]

I) In accordance with one aspect of the present invention, provided is a cathode active material having a carbon coating layer and an olivine structure compound and satisfying Equations 1, 2, and 3 below.

[Equation 1]

$$0 < \text{carbon content} \times \text{Area Ratio}_{LFP} \leq 5$$

[Equation 2]

$$0.45 \leq 1/\text{Area Ratio}_{LFP} \leq 1$$

[Equation 3]

$$1.3 \leq \text{carbon content} \leq 1.5,$$

wherein the carbon content is a total amount (wt%) of carbon measured by a carbon content analysis device, and Area Ratio$_{LFP}$ corresponds to an intensity of a Raman peak corresponding to the olivine structure compound among intensities of all Raman peaks observed in a Raman spectrum.

II) According to I), the cathode active material may be a recycled cathode active material.

III) According to I) to II), the cathode active material may be a single particle.

IV) According to I) to III), the olivine structure compound may be represented by Chemical Formula 1 below.

[Chemical Formula 1]        $Li_{1+a}Fe_{1-b}M_b(PO_{4-c})X_c,$

wherein M includes one or more elements selected from the group consisting of Al, Mg, Ni, Co, Mn, Ti, Ga, Cu, V, Nb, Zr, Ce, In, Zn, and Y; X includes one or more elements selected from the group consisting of F, S, and N; and a, b, c are $-0.5 \leq a \leq 0.5$, $0 \leq b \leq 0.5$, $0 \leq c \leq 0.1$, respectively.

V) According to I) to IV), the cathode active material having the olivine structure compound may include lithium iron phosphate.

VI) In accordance with another aspect of the present invention, provided is a cathode active material having a carbon coating layer and an olivine structure compound and satisfying Equations 1, 2, and/or 3 below.

[Equation 1]

$$0 < \text{carbon content} \times \text{Area Ratio}_{LFP} \leq 5$$

[Equation 2]

$$0.45 \leq 1/\text{Area Ratio}_{LFP} \leq 1$$

[Equation 3]

$$1.3 \leq \text{carbon content} \leq 1.5,$$

wherein the carbon content is a total amount (wt%) of carbon measured by a carbon content analysis device, and Area Ratio$_{LFP}$ corresponds to an intensity of a Raman peak corresponding to the olivine structure compound among intensities of all Raman peaks observed in a Raman spectrum.

VII) In accordance with still another aspect of the present invention, provided is a method of recycling a cathode active material, the method including heat-treating a waste cathode in which a cathode active material layer including a cathode active material having an olivine structure compound is applied onto a current collector to desorb the cathode active material from the current collector; coating a surface of the desorbed cathode active material; and milling the coated cathode active material,

wherein the coating step includes applying a coating agent to the desorbed cathode active material, performing preliminary milling, and performing spray drying; and calcining the spray-dried cathode active material at 750 to 1200 °C under a reducing atmosphere.

VIII) According to VII), the heat treatment may be performed by heating at a temperature of 300 to 650 °C under an oxidizing atmosphere.

IX) According to VII) to VIII), the heat treatment may be performed by increasing temperature at a heating rate of 1 to 10 °C/min to reach the heat treatment temperature, and may be performed for 10 minutes to 5 hours.

X) According to VII) to IX), the coating agent may be a coating agent including one or more of a metal, an organic metal, and a carbon component.

XI) According to VII) to X), the calcination may be performed for 1 to 24 hours.

XII) According to VII) to XI), the preliminary milling may be performed using a ball mill, a high-energy ball mill, a vibrating mill, or a roll-mill.

XIII) According to VII) to XII), the milling step may be performed using a jet mill.

XIV) According to VII) to XIII), the olivine structure compound may be represented by Chemical Formula 1 below.

[Chemical Formula 1]     $Li_{1+a}Fe_{1-b}M_b(PO_{4-c})X_c,$

wherein M includes one or more elements selected from the group consisting of Al, Mg, Ni, Co, Mn, Ti, Ga, Cu, V, Nb, Zr, Ce, In, Zn, and Y; X includes one or more elements selected from the group consisting of F, S, and N; and a, b, c are -0.5≤a≤0.5, 0≤b≤0.5, 0≤c≤0.1, respectively.

XV) In accordance with yet another aspect of the present invention, provided is a secondary battery including the cathode active material according to any one of I) to VI).

[Advantageous Effects]

According to the present invention, a cathode active material recycled from a waste cathode can have a structure similar to the crystal structure of a fresh cathode active material, and the area where an olivine structure compound is mixed within a carbon coating layer on the surface of the cathode active material can be reduced. Accordingly, when the cathode active material is applied to a secondary battery, excellent battery characteristics can be provided.

In particular, the present invention has an effect of providing a recycled cathode active material and a secondary battery including the same. According to the present invention, lifespan characteristics can be excellent in a high-voltage environment, thermal stability can be increased, and the amount of gas generated during charging and discharging can be reduced.

[Description of Drawings]

The following drawings attached to this specification illustrate embodiments of the present invention, and are presented to further understand the technical idea of the present invention in combination with the detailed description described below. Accordingly, the present invention is not limited to these drawings.

FIG. 1 is a graph showing the measurement results of variables for measuring the carbon coating quality of the recycled cathode active materials obtained in Example 1 and Comparative Examples 1 to 3.
FIG. 2 is a graph showing the results of Raman spectrum analysis of the recycled cathode active materials obtained in Example 1 and Comparative Examples 1 to 3.
FIG. 3 is a graph showing the results of evaluating the CHC capacity retention rate according to the number of cycles at 45 °C for secondary batteries including the recycled cathode active materials obtained in Example 1 and Comparative Examples 1 to 3.

[Best Mode]

The present inventors have been studying a method of directly recycling a waste cathode including a cathode active material including a compound having an olivine structure without decomposing the waste cathode to obtain the cathode active material. During the study, the present inventors confirmed that, when a coating agent was applied onto a cathode active material recovered through a desorption process, and the calcination conditions of the cathode active material were controlled, the crystal structure was restored to that of a fresh cathode active material, and the area where an olivine structure compound remains on the carbon coating surface was reduced. In addition, when the cathode active material was applied to a secondary battery, the battery characteristics was improved. Based on these results, the present inventors conducted further studies to complete the present invention.

In the present disclosure, the cathode active material layer of the waste cathode may include a cathode active material, a binder, and a conductive material.

In the present disclosure, the "oxidizing atmosphere" may be, specifically, air or an atmosphere having an oxygen purity of 10 % or more.

In the present disclosure, the fresh cathode active material refers to a fresh cathode active material newly synthesized and manufactured, rather than obtained through recovery and recycling from waste batteries.

Hereinafter, a cathode active material of the present invention and a secondary battery including the same will be described in detail.

The terms and words which are used in the present specification and the appended claims should not be construed as being confined to common meanings or dictionary meanings but should be construed as meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

## Cathode active material

For example, the present invention includes a cathode active material having an olivine structure compound.

For example, the olivine structure compound may be a lithium iron phosphate (LFP)-based compound, preferably a compound represented by Chemical Formula 1, more preferably $LiFePO_4$ having an olivine structure. In this case, electrochemical performance, resistance characteristics, and capacity characteristics may be excellent.

[Chemical Formula 1]     $Li_{1+a}Fe_{1-b}M_b(PO_{4-c})X_c$

In Chemical Formula 1, M includes one or more elements selected from the group consisting of Al, Mg, Ni, Co, Mn, Ti, Ga, Cu, V, Nb, Zr, Ce, In, Zn, and Y; X includes one or more elements selected from the group consisting of F, S, and N;

and a, b, c are $-0.5 \leq a \leq 0.5$, $0 \leq b \leq 0.5$, $0 \leq c \leq 0.1$, respectively.

For example, the surface of the cathode active material may be coated with carbon. Preferably, a carbon coating layer may be formed on the surface of the cathode active material. In this case, the structural stability of the cathode active material may be improved without chemical and physical changes in the cathode active material, thereby improving electrochemical properties such as rate performance, lifespan characteristics, and capacity. In addition, the physicochemical properties may be improved by substitution with a heterogeneous element on the surface of the cathode active material, thereby controlling the amount of residual lithium and reducing pH.

The cathode active material of the present invention is a cathode active material having a carbon coating layer and an olivine structure compound, and satisfies Equations 1, 2, and 3 below.

$$[Equation\ 1]$$

$$0 < \text{carbon content} \times \text{Area Ratio}_{LFP} \leq 5$$

$$[Equation\ 2]$$

$$0.45 \leq 1/\text{Area Ratio}_{LFP} \leq 1$$

$$[Equation\ 3]$$

$$1.3 \leq \text{carbon content} \leq 1.5$$

Here, the carbon content is a total amount (wt%) of carbon measured by a carbon content analysis device, and Area Ratio$_{LFP}$ corresponds to the intensity of a Raman peak corresponding to the olivine structure compound among the intensities of all Raman peaks observed in a Raman spectrum.

Equation 1 is a correlation equation between the variables Area Ratio$_{LFP}$ and total carbon amount described below. A smaller calculated value indicates a reduction in the area where an olivine structure compound is mixed in the carbon coating.

For example, Equation 1 is greater than 0 and 5 or less, preferably 0.5 to 4, more preferably 1 to 3. In this case, the electrochemical properties may be improved by improving the coating quality of the carbon surface.

Equation 2 is the reciprocal number of the variable Area Ratio$_{LFP}$, which corresponds to the intensity of the Raman peak corresponding to the olivine structure compound among the intensities of all Raman peaks shown in a Raman spectrum, and refers to the reciprocal number of the calculated value of the intensity of the Raman peak corresponding to the olivine structure compound among the intensities of all Raman peaks shown in the Raman spectrum. As the calculated value increases, the area occupied by the olivine structural compound decreases.

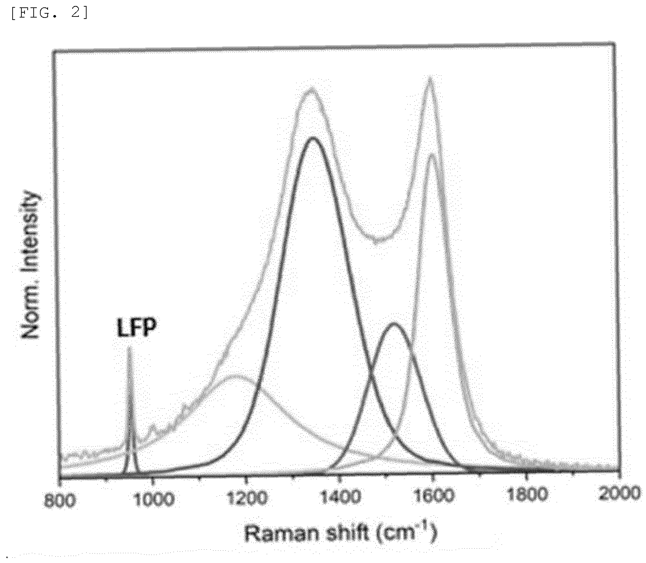

For example, FIG. 2 below is a Raman spectrum analysis graph of the recycled cathode active materials obtained in Example 1 and Comparative Examples 1 to 3. Among these peaks, the peak denoted as LFP corresponds to the Raman peak of lithium iron phosphate corresponding to the aforementioned olivine structure compound.

For example, Equation 2 may be within 0.45 to 1, preferably 0.5 to 0.1, more preferably 0.6 to 1. In this case, the coating quality of the carbon surface may be improved, and thus the lifespan characteristics of a battery may be excellent.

Equation 3 is a total carbon content (wt%) measured using a carbon content analysis device, and may include not only the carbon coating content but also the remaining uncoated carbon content, so Equation 3 may be difficult to use alone to measure carbon coating quality.

Accordingly, in the present invention, the total amount of carbon is used as a variable to write a correlation equation such as Equation 1 described above, and it is predicted that the area of the carbon coating will increase as the corresponding value increases.

For example, Equation 3 is within 1.3 to 1.5, preferably 1.33 to 1.5, more preferably 1.35 to 1.5. In this case, the coating quality of the carbon surface may be improved, and thus electrochemical properties may be excellent.

In addition, for example, the cathode active material may satisfy Equations 1 and 2 or Equations 1 and 3, preferably Equations 1 to 3 simultaneously. In this case, the coating quality of the carbon surface may be greatly improved, and thus electrochemical properties may be excellent.

That is, the present invention may provide a cathode active material having a carbon coating layer and an olivine structure compound, and the cathode active material may satisfy Equations 1, 2, and/or 3 below.

$$[Equation\ 1]$$

$$0 < carbon\ content \times Area\ Ratio_{LFP} \leq 5$$

$$[Equation\ 2]$$

$$0.45 \leq 1/Area\ Ratio_{LFP} \leq 1$$

$$[Equation\ 3]$$

$$1.3 \leq carbon\ content \leq 1.5$$

Here, the carbon content is a total amount (wt%) of carbon measured by a carbon content analysis device, and Area Ratio$_{LFP}$ corresponds to the intensity of a Raman peak corresponding to the olivine structure compound among the intensities of all Raman peaks observed in a Raman spectrum.

The cathode active material may be preferably a recycled cathode active material. In this case, economy and productivity may be excellent.

The cathode active material may be preferably a single particle. More preferably, the cathode active material does not include a secondary particle. In this case, since particle breakage does not occur during the electrode manufacturing process, deterioration of battery performance due to fine particles may be prevented, lifespan characteristics may be excellent in a high-voltage environment, thermal stability may be increased, and the amount of gas generated during charging and discharging may be reduced.

For example, the single particle may be a particle composed of 30 or fewer nodules, preferably a particle composed of 1 to 20 nodules, more preferably a particle composed of 1 to 10 nodules, still more preferably a particle composed of 1 to 5 nodules, most preferably a particle composed of 1 nodule. In this case, a cathode material that prevents battery performance degradation due to fine particles by not causing particle breakage during an electrode manufacturing process, has excellent lifespan characteristics in a high-voltage environment, has high thermal stability, and generates a small amount of gases during charging and discharging may be provided.

In the present disclosure, a nodule refers to a particle unit body that constitutes a single particle, and may be a single crystal lacking a crystalline grain boundary, or a polycrystal in which no grain boundary exists in appearance when observed under a field of view of 5,000 to 20,000 times using a scanning electron microscope (SEM) or electron backscatter diffraction (EBSD).

In the present disclosure, the number of nodules refers to the average number of nodules of cathode active material particles. A cathode containing a cathode active material is cut using the ion milling method, and a cross-sectional image in the thickness direction of the cut cathode is obtained using a scanning electron microscope (SEM). Then, within the cross-sectional image, at least 30 particles are selected for each of large-diameter cathode active material particles and small-diameter cathode active material particles. Then, the number of nodules in the cross-section of each cathode active material particle is measured through SEM image analysis, and the arithmetic mean is calculated.

In the present disclosure, a secondary particle is an aggregate formed by the agglomeration of multiple single particles and refers to a particle containing more than 30 nodules.

For example, the cathode active material may have a fluorine (F) content of 1,000 mg/kg or less, preferably 900 mg/kg or less, more preferably 10 to 800 mg/kg. Within this range, the coating quality of the carbon surface may be improved, and charge capacity, resistance characteristics, and capacity characteristics may be excellent.

In the present disclosure, the fluorine (F) content may be measured using an ICP analyzer. At this time, a general ICP analyzer widely used in laboratories may be used, but there is no deviation depending on the measuring device or method.

For example, the cathode active material may have an average crystal size of 50 to 500 nm, preferably 50 to 300 nm, more preferably 50 to 200 nm. Within this range, capacity may be improved by increasing conductivity as the crystal size decreases.

In the present disclosure, the average crystal size may be measured by XRD crystal analysis and there is no deviation depending on the measuring device or method. Specifically, 5 g of cathode active material particles are placed in a holder, the particles are irradiated with X-rays, and the resulting diffraction grating is analyzed to obtain the average crystal size. At this time, according to the calculation method, the average crystal size of the primary particles of the cathode active material particles may be obtained from the half-width of the main peak or three or more peaks.

For example, the content of LiOH remaining on the surface of the cathode active material is small. Preferably, no LiOH is detected on the surface of the cathode active material. In this case, the coating quality of the carbon surface may be improved, and thus charge capacity, resistance characteristics, and capacity characteristics may be excellent.

For example, the content of $Li_2CO_3$ remaining on the surface of the cathode active material may be 0.51 % by weight or less, preferably 0.50 % by weight or less, more preferably 0.01 to 0.50 % by weight. Within this range, the coating quality of the carbon surface may be improved, and thus charge capacity, resistance characteristics, and capacity characteristics may be excellent.

In the present disclosure, the residual amounts of LiOH and $Li_2CO_3$ remaining on the surface of the cathode active material may be measured using a pH titrator T5 (Mettler Toledo Co.). Specifically, 5 g of the cathode active material is dispersed in 100 ml of distilled water and mixed at 300 rpm for 5 minutes, and then filtering is performed to filter out an active material and obtain a solution (filtrate). Change in pH values is measured while titrating the filtrate with a 0.1 M HCl solution. Based on the measurement result, a pH titration curve is obtained. Using the pH titration curve, the amounts of residual LiOH and $Li_2CO_3$ in the cathode active material are calculated.

## Method of recycling a cathode active material

The method of recycling a cathode active material of the present invention includes a step of heat-treating a waste cathode in which a cathode active material layer including a cathode active material having an olivine structure compound is applied onto a current collector to desorb the cathode active material from the current collector; a step of applying a coating agent to the desorbed cathode active material, performing preliminary milling, and performing spray drying; and a step of calcining the spray-dried cathode active material at 750 to 1200 °C under a reducing atmosphere. In this case, the crystal structure may be restored to the structure of a fresh cathode active material. Accordingly, when the cathode active material is used as a cathode active material of a battery, excellent battery characteristics may be provided. In addition, the cathode active material may be recycled without decomposing the cathode active material in a simple and environmentally friendly way, and the economy and productivity may be greatly improved.

According to the method of recycling a cathode active material of the present invention, as described above, preliminary milling, calcination, and milling may be performed sequentially to recover a recycled cathode active material. Hereinafter, milling performed before calcination is referred to as 'pre-calcination milling or preliminary milling', and milling performed after calcination is referred to as 'post-calcination milling or milling'.

Hereinafter, each step of the method of recycling a cathode active material is described in detail.

## Desorption step

In the present invention, the method of recycling a cathode active material includes a step of heat-treating a waste cathode to which a cathode active material layer including a cathode active material having an olivine structure compound is applied on a current collector. In this case, the purity of the recovered cathode active material may be increased.

The waste cathode may be preferably a cathode separated from a secondary battery discarded after use, a defective cathode sheet or cathode scrap generated in the secondary battery manufacturing process, or a cathode sheet or cathode scrap discarded after cutting. For example, in the case of cathode scrap generated during the manufacturing process, excellent battery characteristics may be achieved because there is no loss of lithium ions in a cathode active material.

The secondary battery may preferably be a lithium secondary battery.

When necessary, the waste cathode may be used after being subjected to a crushing process.

The crushing may be performed without any particular limitation using a physical crushing method that is commonly used, and is not limited to the crushing size. For example, the crushing may be performed in a size of approximately 2 cm $\times$ 2 cm (width $\times$ length).

In the present disclosure, the olivine structure is a type of crystal structure, and is a 3D hexahedral lattice structure. In that structure, P-O (phosphorus-oxygen) is strongly bonded, so that the structure may be maintained even when all lithium ions are lost. Accordingly, performance degradation due to charging and discharging may be prevented, and thermal stability may be excellent. Compared to other cathode active materials, cathode active materials with the olivine structure have disadvantages such as low energy density, low electrical conductivity, and low lithium ion diffusion, but the cathode active materials have great economic advantages because inexpensive iron is used instead of expensive cobalt.

The olivine structure may be confirmed by measurement methods commonly practiced in the technical field to which the present invention belongs, as a specific example, by X-ray diffraction analysis (XRD).

For example, the olivine structure compound may be a compound represented by Chemical Formula 1 below. In this case, high-temperature stability, lifespan characteristics, and economy may be excellent.

[Chemical Formula 1]    $Li_{1+a}Fe_{1-b}M_3(PO_{4-c})X_c$

In Chemical Formula 1, M includes one or more elements selected from the group consisting of Al, Mg, Ni, Co, Mn, Ti, Ga, Cu, V, Nb, Zr, Ce, In, Zn, and Y; X includes one or more elements selected from the group consisting of F, S, and N; and a, b, c are $-0.5 \leq a \leq 0.5$, $0 \leq b \leq 0.5$, $0 \leq c \leq 0.1$, respectively.

The olivine structure compound may preferably include $LiFePO_4$ having an olivine structure. In this case, high-temperature stability, lifespan characteristics, and economy may be excellent.

For example, the conductive material may be a carbon-based conductive material, preferably carbon black, CNT, or a mixture thereof.

For example, the binder may be a polymer binder, preferably polyvinylidene fluoride (PVdF), acrylonitrile-butadiene rubber (NBR), or a mixture thereof, more preferably polyvinylidene fluoride.

For example, the cathode active material layer of the waste cathode may include a solvent. The solvent may be used to mix a cathode active material, a binder, and/or a conductive material, and may be a solvent commonly used in the technical field to which the present invention belongs. For example, the solvent may include one or more selected from the group consisting of dimethyl sulfoxide (DMSO), isopropyl alcohol, N-methyl-2-pyrrolidone (NMP), acetone, and water.

For example, the cathode active material layer of the waste cathode may further include a dispersant.

For example, the dispersant may include one or more selected from the group consisting of cellulose compounds, polyalkylene oxide, polyvinyl alcohol, polyvinyl pyrrolidone, polyvinyl acetal, polyvinyl ether, polyvinyl sulfonic acid, polyvinyl chloride (PVC), polyvinylidene fluoride, chitosan, starch, amylose, polyacrylamide, poly-N-isopropylacrylamide, poly-N,N-dimethylacrylamide, polyethyleneimine, polyoxyethylene, poly(2-methoxyethoxyethylene), poly(acrylamide-co-diallyldimethylammonium chloride), acrylonitrile-butadiene-styrene (ABS) copolymers, acrylates-styrene-acrylonitrile (ASA) copolymers, mixtures of acrylate-styrene-acrylonitrile (ASA) copolymers and propylene carbonate, styrene-acrylonitrile (SAN) copolymers, and methyl methacrylate-acrylonitrile-butadiene-styrene (MABS) copolymers.

For example, the heat treatment step may be performed by heating to a temperature of 300 to 650 °C, preferably 400 to 650 °C, more preferably 500 to 600 °C under an oxidizing atmosphere. In this case, foreign substances, such as a binder and a conductive material, included in the cathode active material of the waste cathode may be removed, and a cathode active material precursor may be recovered, which is referred to as 'desorption process'.

In the present disclosure, the cathode active material precursor is a term proposed to distinguish the cathode active material precursor from a cathode active material that is ultimately recycled through a step of coating the surface of the cathode active material described below, and means a material that may provide a recycled cathode active material through a predetermined cathode active material coating process.

The desorption step may be performed without any particular limitation by a method commonly performed in the technical field to which the present invention belongs, and the heating rate and heating time may be appropriately adjusted as needed. Accordingly, the residual amount of metal flowing from a current collector may be significantly reduced without a separate pretreatment process to separate or remove the current collector. Thus, the purity of the cathode active material may be increased, and process simplification may be achieved.

For example, the cathode active material within the waste cathode may be coated with a coating agent including a metal and/or carbon. In general, in the secondary battery field, the cathode active material may be coated with various coating agents including a metal and/or carbon for the purpose of improving battery performance. During the process of recovering a cathode active material from a waste cathode, the structure of this coating layer is destroyed, and when the cathode active material is reused in a battery without removing the coating layer, deterioration of battery performance may be caused. Accordingly, when a cathode active material inside a waste cathode is coated, it is advantageous to remove the coating layer. In the heat treatment step, the carbon coating on the surface of the cathode active material may be removed. In this case, the purity of the recovered cathode active material may be increased, and battery performance degradation may be prevented.

For example, the desorption step may be performed under an oxidizing atmosphere including an air atmosphere or an oxygen atmosphere. In this case, foreign metal substances introduced from the binder, conductive material, and current collector may be smoothly removed, so that the desired cathode active material may be recovered in high purity and high yield.

For example, the oxidizing atmosphere may have an oxygen purity of 10 % or more, preferably 20 % or more, more preferably 30 % or more or 50 % or more, still more preferably 70 % or more, still more preferably 80 % or more, still more preferably 90 to 99 %. Within this range, the desired cathode active material may be recovered in high purity and high efficiency.

The purity (%) of oxygen may be expressed as volume% or mol%.

The purity of oxygen in the present invention may be measured without particular limitations using measurement methods commonly used in the technical field to which the present invention pertains.

For example, until the heat treatment temperature is reached, the heating rate may be 1 to 10 °C/min, preferably 2 to 9 °C/min, more preferably 3 to 7 °C/min. Within this range, the desired cathode active material may be recovered in high purity and high efficiency.

For example, at the heat treatment temperature, the heat treatment time may be 10 minutes to 5 hours, preferably 30 minutes to 5 hours, more preferably 30 minutes to 2 hours, still more preferably 30 minutes to 1 hour. Within this range, the desired cathode active material may be recovered in high purity and high efficiency.

In the present disclosure, the heat treatment time is time of heat treatment performed at the corresponding heat treatment temperature, and does not include time required to reach the corresponding heat treatment temperature.

For example, in the heat treatment step, the cathode active material layer of the waste cathode may be separated from the current collector.

For example, in the heat treatment step, after the heat treatment is completed, foreign substances may be removed from the waste cathode, and high-purity cathode active material precursor powder may be obtained. Accordingly, the "cathode active material recovered in the heat treatment step" may refer to the cathode active material precursor.

After completion of the desorption step, the recovered cathode active material precursor may preferably be composed of components capable of providing an LFP cathode active material. As a specific example, $Fe_2O_3$ and $Li_3Fe_2(PO_4)_3$ may be included. In this case, the residual amount of metallic foreign substances such as aluminum and carbon-based foreign substances may be significantly reduced through subsequent recycling treatment, thereby providing a high-purity recycled LFP cathode active material. The recycled LFP cathode active material has high purity. Accordingly, when the recycled LFP cathode active material is applied as the cathode active material of a secondary battery, excellent battery characteristics may be realized.

For example, after the desorption step is completed, in the recovered cathode active material precursor, the content of residual metals introduced from the current collector may be 390 ppm or less, preferably 250 ppm or less, more preferably 240 ppm or less, still more preferably 230 ppm or less, still more preferably 225 ppm or less, and the lower limit of the content is not particularly limited. In terms of the balance between the purity and recovery rate of a cathode active material and process efficiency, the content of residual metals may be 10 ppm or more, or 50 ppm or more. In this case, a high-purity cathode active material may be recovered.

The metal introduced from the current collector is not particularly limited as long as the metal is a metal commonly applied to current collectors in the technical field to which the present invention belongs, and as a specific example, may be aluminum.

In the present disclosure, as a method of measuring the content of a metal element, a method commonly practiced in the technical field to which the present invention belongs may be used without particular limitation, and as a specific example, the content of a metal element may be measured by ICP (Inductively Coupled Plasma) analysis.

For example, after the desorption step is completed, the recovered cathode active material precursor may have a carbon element (C) content of 1.0 % by weight or less, preferably 0.5 % by weight or less, more preferably 0.1 % by weight or less, still more preferably 0.08 % by weight or less, still more preferably 0.06 % by weight or less, and the lower limit thereof is not particularly limited, In terms of the balance between the purity and recovery rate of a cathode active material and process efficiency, the carbon element (C) content may be 0.001 % by weight or more, or 0.01 % by weight or more. In this case, a high-purity cathode active material may be recovered.

In the present disclosure, as the method of measuring the content of a carbon element, a method of measuring the content of a carbon element commonly practiced in the technical field to which the present invention belongs may be used without particular limitation, and as a specific example, the content of a carbon element may be measured by quantitative analysis using a carbon/sulfur (CS) determinator.

## Coating the surface of a cathode active material

In the present invention, the method of recycling a cathode active material includes a step of coating the surface of the cathode active material recovered in the heat treatment step. In this case, a coating layer may be formed on the particle surface of the recycled cathode active material. Thus, when the recycled cathode active material is applied to a secondary battery, the output characteristics, charging and discharging performance, and lifespan performance of the battery may be improved, and battery characteristics equivalent to those when a fresh cathode active material is applied may be provided. In addition, a structure similar to the crystal structure of the fresh cathode active material may be obtained before forming the coating layer. Thus, the coating layer may be uniformly formed on the particle surface, the area where an olivine structure compound is mixed within a carbon coating layer on the surface of the cathode active material may be reduced, and thus battery performance may be improved.

For example, the coating may be performed using a coating agent including one or more of a metal, an organic metal, and a carbon component. Preferably, the coating may be carbon coating using a coating agent including a carbon component. In this case, battery characteristics may be further improved.

As the coating agent containing carbon, a coating agent containing a carbon component commonly used in the technical field to which the present invention belongs may be used without particular limitation. As a specific example, the carbon component may include one or more selected from the group consisting of sugars, such as sucrose, glucose, and fructose, graphite, and polyvinylidene fluoride, preferably sugars, more preferably sucrose. In this case, coating may be easily performed, and economic efficiency may be improved. In addition, when applied to a battery, battery characteristics may be significantly improved.

The coating agent including a metal may be preferably a coating agent including one or more selected from the group consisting of B, W, Al, Ti, Mg, Ni, Co, Mn, Si, Zr, Ge, Sn, Cr, Fe, V, and Y, more preferably a coating agent including one or more selected from the group consisting of B, W, Al, Ti, and Mg, still more preferably a coating agent including boron (B), tungsten (W), or a mixture thereof, still more preferably a coating agent including tungsten (W) and boron (B), as a specific example, a coating agent including tungsten boride (WB). In this case, resistance characteristics and lifespan characteristics may be improved.

For example, the coating agent including a metal may be an oxide or an acid including the metal as an element in the molecule thereof.

As the coating agent including an organic metal, coating agents including an organic metal compound containing a metal commonly used in the art to which the present invention pertains may be used without particular limitation. As a specific example, metal alkoxides may be used.

The coating agent may have preferably an average diameter of 1 to 1000 nm and a specific surface area of 10 to 100 $m^2$/g, more preferably an average diameter of 10 to 100 nm and a specific surface area of 5 to 100 $m^2$/g for metal, organic metal, and carbon components. Within this range, the coating agent may be uniformly adhered to the surface of the cathode active material, the structural stability of a cathode active material may be imparted, and thus the problem of low electrical conductivity of a cathode active material may be improved.

In the present disclosure, the average diameter may be measured by a measurement method commonly used in the art to which the present invention pertains. For example, the average diameter may be measured by a laser diffraction method. Specifically, cathode active material particles are dispersed in a dispersion medium, the dispersed particles are placed in a commercially available laser diffraction particle size measuring device such as Microtrac MT 3000, and the particles are irradiated with an ultrasonic wave of about 28 kHz with an output of 60 W. Then, an average particle diameter (D50) is calculated based on 50 % of the particle size distribution in the measuring device.

In the present disclosure, the specific surface area may be measured by a measurement method commonly used in the art to which the present invention pertains. For example, the specific surface area may be measured by Brunauer-Emmett-Teller (BET) method. Specifically, the specific surface area may be calculated based on the amount of nitrogen gas adsorbed under liquid nitrogen temperature (77 K) using BELSORP-mino II manufactured by BEL Japan Co.

For example, based on components coated on the surface of the cathode active material excluding a solvent, the coating agent may be included in an amount of 1 to 10 % by weight, preferably 2 to 8 % by weight, more preferably 3 to 7 % by weight. Within this range, structural stability and electrochemical performance may be improved while maintaining the intrinsic properties of the cathode active material.

Coating methods commonly used in the art to which the present invention pertains may be used as the coating method of the present invention without particular limitation. For example, the coating may be performed by adding the coating agent to the surface of a cathode active material. As a specific example, a liquid method of mixing a cathode active material and a liquid coating agent, a mechanochemical method using the high mechanical energy of ball milling, a fluid bed coating method, a spray drying method, a precipitation method of precipitating a coating agent onto the surface of a cathode active material in an aqueous solution, a method using reaction between a vapor phase coating agent and a cathode active material, or sputtering may be used. In this case, the coating may be formed uniformly, agglomeration of cathode active material particles may be prevented, and the coating process may be performed smoothly, resulting in excellent productivity.

As a specific example, the step of coating the surface of a cathode active material may include a step of applying a coating agent to the cathode active material obtained in the heat treatment step, performing preliminary milling, and performing spray drying; and a step of calcining the spray-dried cathode active material at 750 to 1200 °C under a reducing atmosphere. In this case, the coating efficiency may be excellent, particle agglomeration of the cathode active material may be prevented, and a coating layer may be evenly formed on the surface of the cathode active material particles. In addition, the area where an olivine structure compound is mixed in the carbon coating layer may be reduced, so that the battery performance may be improved.

For example, the coating may be performed using a coating agent solution obtained by mixing the coating agent including the carbon component in an appropriate solvent. At this time, any solvent commonly used may be used as the solvent without any particular limitation. As a specific example, an aqueous solvent, more specifically, deionized water may be used as the solvent. Based on a total weight of the coating agent solution, the solid content in the coating agent solution may be 20 % by weight or less, preferably 1 to 15 % by weight, more preferably 2 to 10 % by weight. In this case, the coating efficiency may be excellent, and the subsequent milling process may proceed smoothly. Accordingly, the coating layer ultimately formed on the particle surface of the cathode active material may be uniform.

For example, the coating may be performed using various methods, such as a liquid method of mixing a cathode active material and a liquid coating agent and a precipitation method of precipitating a coating agent onto the surface of a cathode active material in an aqueous solution. In the case of a method using the reaction between a gaseous coating agent and a cathode active material, a method simply mixing a solid coating agent and a cathode active material, and a sputtering method, as shown in Comparative Example 3 described later, the above methods were found to be unsuitable for implementing the quality of the carbon coating layer.

The spray drying may be performed without any particular limitations using spray drying equipment commonly used in the technical field to which the present invention belongs. For example, an ultrasonic spray drying device, an air nozzle spray drying device, an ultrasonic nozzle spray drying device, a filter expansion droplet generating device, or an electrostatic spray drying device may be used. As a specific example, PSD-05 (manufactured by Eugene Tech Co., Ltd.) equipment may be used, but the present invention is not limited thereto.

In addition, spraying pressure, the supply speed of a coating agent solution, and the like may be appropriately selected considering the amount of the coating agent to be coated on the surface of the recycled cathode active material.

The calcination may be performed by heating the coating agent-coated cathode active material at 750 to 1200 °C, preferably 750 to 1100 °C, more preferably 750 to 1000 °C, still more preferably 750 to 900 °C under a reducing atmosphere after the drying. In this case, the coating agent may be stably coated on the surface of the cathode active material while maintaining the inherent properties of the cathode active material. From Example 1 and Comparative Examples 1 and 3 described below, it can be confirmed that the calcination process conditions and the calcination temperature thereof are variables that may implement Equations 1 to 3.

For example, in the calcination, until the calcination temperature is reached, the heating rate may be 1 to 20 °C/min, preferably 1 to 10 °C/min, more preferably 2 to 7 °C/min. Within this range, the desired calcination effect may be sufficiently achieved.

For example, the calcination may be performed at the calcination temperature for 1 to 24 hours, preferably 1 to 16 hours, more preferably 3 to 16 hours. Within this range, the desired calcination effect may be sufficiently achieved.

For example, the reducing atmosphere may be an argon (Ar) or nitrogen ($N_2$) atmosphere. As a preferred example, in the reducing atmosphere, the purity of nitrogen may be 80 % or more, preferably 90 % or more, more preferably 90 to 99.8 %, still more preferably 95 to 99.8 %. In this case, during the calcination process, oxidation of the coating agent may be prevented, and a coating layer may be stably formed on the surface of the cathode active material.

The purity (%) of nitrogen may be volume% or mol%.

In this description, the purity of nitrogen may be measured without any particular limitation by a measurement method commonly used in the technical field to which the present invention belongs.

For example, based on a total weight of the recycled cathode active material including the weight of the coating layer, the amount of the coating layer may be 0.1 to 15 % by weight, preferably 0.2 to 10 % by weight, more preferably 0.5 to 5 % by weight, still more preferably 0.7 to 3 % by weight, still more preferably 0.8 to 2 % by weight. Within this range, the desired coating effect may be sufficiently achieved.

The amount of the coating layer may be measured using a measurement method commonly used in the technical field to which the present invention belongs, and as a specific example, may be measured quantitatively by thermogravimetric analysis (TGA) or a carbon/sulfur (CS) determinator.

The thickness of the coating layer may be appropriately controlled depending on the desired coating amount. In the present disclosure, the thickness of the coating layer may be measured by a measurement method commonly practiced in the technical field to which the present invention belongs. For example, the thickness of the coating layer may be obtained by measuring the long-side diameters of 5 to 100 cathode active material particles using a transmission electron microscope (TEM) or a scanning electron microscope (SEM), and then calculating the arithmetic mean of the measured values.

For example, the coating step may include a step (pre-calcination milling step) of performing preliminary milling before spray drying after mixing the desorbed cathode active material and the coating agent. In this case, by controlling the particle size within a predetermined range before subjecting the coated cathode active material into a subsequent recycling process, the particle diameter and particle size distribution of the ultimately obtained recycled cathode active material may be evenly controlled. In addition, by controlling the particles in a state favorable for the recovery of the crystal structure of the cathode active material in the subsequent step, the battery characteristics may be significantly improved.

For example, before the calcination, the milling (preliminary milling) may be performed using a ball mill, a high-energy ball mill, a vibrating mill, or a roll-mill, preferably a ball mill. In this case, the particle size distribution of the cathode active material may be easily controlled, and the average particle diameter of the finally obtained recycled cathode active material may be easily controlled, which may be advantageous for the recovery of the crystal structure of the cathode active material in a subsequent step.

For example, before the calcination, the milling (preliminary milling) may be performed using a ball mill for 5 hours to 24 hours, preferably 5 hours to 20 hours, more preferably 5 hours to 16 hours, still more preferably 5 hours to 13 hours, still more preferably 6 hours to 12 hours, still more preferably 8 to 10 hours. Within this range, the occurrence of fine particles may be suppressed, and the particle size distribution of the cathode active material may be smoothly controlled within a narrow range.

For example, before the calcination, the milling (preliminary milling) may be performed at 100 to 500 rpm, preferably 150 to 450 rpm, more preferably 180 to 420 rpm, still more preferably 190 to 410 rpm, still more preferably 200 to 400 rpm, still more preferably 250 to 320 rpm. In this case, the occurrence of fine particles may be suppressed, and the desired effect may be sufficiently achieved while maintaining the crystal structure of the cathode active material.

Before the calcination, the cathode active material powder obtained after the milling may have an average particle diameter ($D_{50}$) of 0.3 to 0.7 $\mu$m, preferably 0.3 to 0.65 $\mu$m, more preferably 0.35 to 0.65 $\mu$m, still more preferably 0.4 to 0.6 $\mu$m, still more preferably 0.45 to 0.55 $\mu$m. In this case, occurrence of fine particles may be suppressed, and the particle size of the finally obtained recycled cathode active material may be controlled within the desired range while maintaining the crystal structure of the cathode active material.

**Milling**

In the present invention, the method of recycling a cathode active material may include a step (post-calcination milling step) of milling the calcined cathode active material. In this case, agglomeration and particle breakage of the finally obtained recycled cathode active material may be prevented, and the generation of fine particles may be prevented. In addition, since the particle size distribution is controlled within a narrow range, the cathode active material may be prepared as a single crystal particle. Accordingly, battery performance degradation due to fine particles may be prevented, and the thermal stability and lifespan characteristics of a battery may be further improved. In addition, ultimately, when the recycled cathode active material is used as a cathode of a secondary battery, battery characteristics equivalent to or superior to those of a fresh cathode active material may be provided.

The milling (post-calcination milling) may be performed using preferably a jet mill. In this case, the particle size and particle distribution of the finally obtained recycled cathode active material may be precisely controlled within a narrow range while preventing damage to the crystal structure of the cathode active material. In addition, since the inflow of foreign substances that may occur during the milling process is prevented, the purity of the recycled cathode active material may be increased.

For example, the jet mill may be operated at a temperature of -30 °C to 30 °C, preferably -20 °C to 20 °C, and a pressure of 0.8 to 10 bar under an inert gas that does not react with the recycled cathode active material. More specifically, the jet milling may be performed under the conditions of a pressure of a feeding line of 2 to 8 bar, preferably 2.5 to 6 bar, more preferably 3 to 5 bar and a pressure of a grinding line of 0.8 to 2 bar, preferably 0.9 to 1.5 bar, more preferably 1 to 1.3 bar. Within this range, damage to the crystal structure of the cathode active material may be prevented, and the particle size and particle distribution of the finally obtained recycled cathode active material may be precisely controlled within a narrow range. For example, the inert gas may be argon (Ar) or nitrogen ($N_2$).

For example, in the milling step, the finally recovered recycled cathode active material may have an average particle diameter ($D_{50}$) of 0.6 to 3.0 $\mu$m, preferably 0.7 to 2.0 $\mu$m, more preferably 0.8 to 1.5 $\mu$m, still more preferably 0.9 to 1.2 $\mu$m, still more preferably 0.955 to 1.255 $\mu$m. In this case, excellent battery characteristics may be achieved.

In the present disclosure, as the method of measuring the average particle diameter ($D_{50}$) of the cathode active material, a measurement method commonly used in the technical field to which the present invention belongs may be used without particular limitation. For example, the average particle diameter may be an average particle diameter based on a cumulative 50 % standard in a particle diameter distribution measured using a laser diffraction method.

For example, in the milling step, the olivine structure compound of the recovered recycled cathode active material may be a compound represented by Chemical Formula 1 below, more preferably LiFePO$_4$ having an olivine structure. In this case, electrochemical performance, resistance characteristics, and capacity characteristics may be excellent.

$$[\text{Chemical Formula 1}] \qquad \text{Li}_{1+a}\text{Fe}_{1-b}\text{M}_b(\text{PO}_{4-c})\text{X}_c$$

In Chemical Formula 1, M includes one or more elements selected from the group consisting of Al, Mg, Ni, Co, Mn, Ti, Ga, Cu, V, Nb, Zr, Ce, In, Zn, and Y; X includes one or more elements selected from the group consisting of F, S, and N; and a, b, c are $-0.5 \leq a \leq 0.5$, $0 \leq b \leq 0.5$, $0 \leq c \leq 0.1$, respectively.

For example, in the milling step, the recovered recycled cathode active material may have a crystal size of 120 to 180 nm, preferably 125 to 170 nm, more preferably 130 to 167 nm, still more preferably 140 to 166 nm, still more preferably 150 to 165 nm as measured by X-ray diffraction (XRD). In this case, the cathode active material structure is restored to the structure of a fresh cathode active material, so excellent battery characteristics may be provided.

According to the method of recycling a cathode active material of the present invention, a recycling process is performed by desorbing and recovering a high-purity cathode active material from a waste cathode through the heat treatment step, performing coating by preliminary-milling the recovered cathode active material and a coating agent, and milling the coated cathode active material. Through the recycling process, battery characteristics equivalent to those of secondary batteries manufactured using a fresh cathode active material may be provided. Accordingly, a secondary battery manufactured using the recycled cathode active material may replace a secondary battery manufactured using a fresh cathode active material.

In addition, by recycling a cathode active material from the waste cathode without decomposing the cathode active material into each element, the entire cathode active material may be recycled from the waste cathode without wasting the metal elements of the cathode active material. In addition, since the replenishment of lithium, iron, and phosphorus is not required during the recycling process of the cathode active material, the economy and productivity may be significantly improved.

In addition, in the present invention, when evaluating the quality (surface quality) of the carbon coating layer of the cathode active material, a coating agent-coated cathode active material having an olivine structure compound is prepared, the total amount of carbon in the cathode active material is measured using a carbon content analysis device, the Area Ratio$_{LFP}$ is calculated from Raman peaks obtained by analyzing the cathode active material using Raman spectrum, the Area Ratio$_{LFP}$ is obtained by dividing the intensity of the Raman peak corresponding to the olivine structural compound by the intensity of all Raman peaks shown in the Raman spectrum, the total amount of carbon measured in advance is multiplied by the Area Ratio$_{LFP}$, and it is determined whether or not all of Equations 1 to 3 below are satisfied. In this case, the carbon coating quality of the cathode active material may be easily measured.

[Equation 1]

$$0 < \text{carbon content} \times \text{Area Ratio}_{LFP} \leq 5$$

[Equation 2]

$$0.45 \leq 1/\text{Area Ratio}_{LFP} \leq 1$$

[Equation 3]

$$1.3 \leq \text{carbon content} \leq 1.5$$

Here, the carbon content is a total amount (wt%) of carbon measured by a carbon content analysis device, and Area Ratio$_{LFP}$ corresponds to the intensity of a Raman peak corresponding to the olivine structure compound among the intensities of all Raman peaks observed in a Raman spectrum.

The carbon content refers to a total weight of carbon materials that contribute to the conductivity of a cathode active material. For example, the content (wt%) of carbon contained in the cathode active material layer may be analyzed using a CS-analyzer (Bruker, G-4 ICARUS series II). Specifically, the carbon content may be calculated from a total amount of $CO_2$ generated when combusting a cathode active material layer using a CS Analyzer.

The method of measuring the carbon coating quality of the cathode active material of the present invention may include all of the contents of the cathode active material described above and the secondary battery including the same. Therefore, redundant description thereof is omitted here.

In addition, to easily convey the method of measuring the carbon coating quality of the cathode active material of the present invention to a person skilled in the art, only the absolutely necessary conditions and devices are described, and other self-evident auxiliary conditions and devices are omitted.

**Secondary battery**

The secondary battery of the present invention includes the cathode active material. Thus, the carbon coating area may be increased. Accordingly, deterioration of battery performance may be prevented, lifespan characteristics may be excellent in a high-voltage environment, thermal stability may be increased, and the amount of gas generated during charging and discharging may be reduced. Thus, electrochemical performance, resistance characteristics, and capacity characteristics may be excellent.

Description of the secondary battery of the present invention may include all of the description of the cathode active material and the method of recycling a cathode active material described above, and thus repeated description is omitted in this specification.

The method of manufacturing a secondary battery according to the present invention is not particularly limited as long as the method is a method of manufacturing a lithium secondary battery commonly used in the technical field to which the present invention belongs.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

Example 1

On an aluminum current collector, as a waste cathode material to which a cathode active material layer including an LFP having an olivine structure, a binder, and a conductive material was applied, cathode scraps remaining after punching out a cathode plate were prepared. Then, the cathode scraps were crushed into a size of 2 cm $\times$ 2 cm.

Then, the heat treatment process was performed by heating at a heating rate of 5 °C/min under an air atmosphere in a furnace and heating at 580 °C for 30 minutes. At this time, the air supply rate was 3 L/min. During this process, a binder inside the waste cathode was thermally decomposed, and cathode active material powder separated from the current collector was recovered.

After the heat treatment, heat supply was stopped, and cooling was performed at room temperature. Then, as a coating agent, a coating agent composition obtained by mixing sucrose in deionized water so that the carbon content was 4.4 parts by weight based on 100 parts by weight of the cathode active material was applied onto the recovered cathode active material powder, preliminary milling (pre-calcination milling) was performed at 300 rpm for 10 hours using a ball mill, and then spray drying was performed. The average particle diameter ($D_{50}$) of the dried cathode active material powder was 0.5 $\mu$m.

In a furnace, the dried cathode active material was heated at a heating rate of 3 °C/min while supplying nitrogen at a rate of 3 L/min, and then calcination was performed at 800 °C for 10 hours to form a carbon (C) coating layer on the surface of the cathode active material. At this time, the coating amount according to CS analysis results after the calcination was completed was 1.43 % by weight.

The coated cathode active material was milled (post-calcination milling) using a jet mill at a feeding line pressure of 4 bar and a grinding line pressure of 1 bar under an air atmosphere to obtain a recycled cathode active material having a particle diameter of $D_{40}$ 0.885 $\mu$m, $D_{50}$ 1.055 $\mu$m, and $D_{60}$ 1.417 $\mu$m.

Example 2

A recycled cathode active material was prepared in the same manner as in Example 1, except that, in the coating step, the milling of the preliminary milling step was performed for 6 hours.

Comparative Example 1

The following wet recycling process was performed on the waste cathode scrap used in Example 1 to prepare a recycled cathode active material.

The waste cathode scrap was treated with sulfuric acid to produce a lithium sulfuric acid solution, then the pH was adjusted to remove impurities, and lithium carbonate was produced through carbonation.

In addition, the residue (iron and phosphorus residue) that did not dissolve during sulfuric acid treatment was dissolved in an acid solution to produce iron phosphate.

A cathode active material was obtained by synthesizing the prepared lithium carbonate and iron phosphate.

Comparative Example 2

Instead of a recycled cathode active material, a fresh LFP cathode active material was prepared. When the fresh LFP cathode active material was analyzed by ICP analysis, the fresh LFP cathode active material was confirmed to be an LiFePO4 cathode active material with an elemental ratio of Li/Fe: 1.06, Li/P: 1.00, and P/Fe: 1.06.

Comparative Example 3

A recycled cathode active material was prepared in the same manner as in Example 1, except that, instead of the coating agent composition used in the coating step of Example 1, sucrose was mixed in a solid phase so that the carbon content was 4.4 parts by weight based on 100 parts by weight of the cathode active material, and then calcination of the milled cathode active material was performed by heating at a heating rate of 3 °C/min under a nitrogen atmosphere and heating at 700 °C for 10 hours.

[Test Example I: Raman spectrum analysis]

Raman spectrum analysis was performed on the recycled or fresh cathode active materials obtained in Example 1 and Comparative Examples 1 to 3.

From the intensities of all Raman peaks shown in the Raman spectrum analysis and the intensities of the Raman peak corresponding to the olivine structure compound among the peaks, the Area Ratio$_{LFP}$ was calculated based on the intensity of the Raman peak corresponding to the olivine structure compound among the intensities of all Raman peaks shown in the Raman spectrum. The items in Table 1 below show the reciprocal number value of the above value, 1/Area Ratio$_{LFP}$ (corresponding to Equation 2), and the results are also shown in FIG. 2 below.

[Test Example II: Total carbon analysis]

The carbon contents of the recycled or fresh cathode active materials obtained in Example 1 and Comparative Examples 1 to 3 were measured using a carbon content analysis device.

Specifically, the carbon content (wt%) contained in the cathode active material layer was calculated based on the total amount of $CO_2$ generated when combusting the cathode active material layer using a CS-analyzer (Bruker, G-4 ICARUS series II).

Specifically, a blank for calibration curve was measured, a standard (JSS 514-8, carbon: 0.2016 wt%) was measured at least three times, and a sample was placed in a crucible and weighed in the amount of 30 mg.

Next, a catalyst was added to the crucible containing the sample, placed on a lower electrode, and the sample was injected from the top to combust and the carbon content (wt%) was measured.

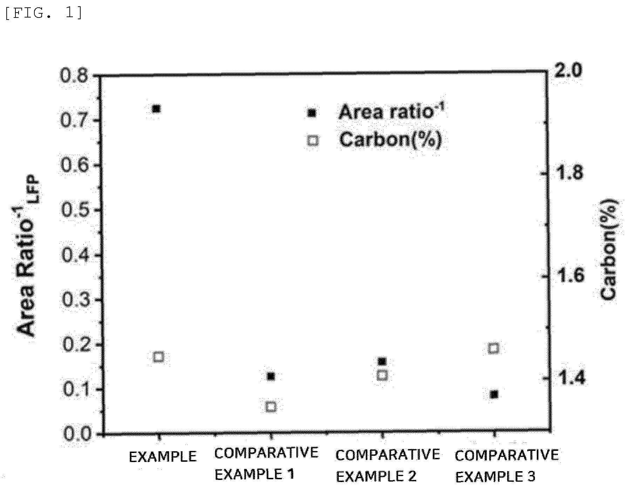

The measurement results are shown in Table 1 and FIG. 1 below (corresponding to Equation 3).

[Table 1]

| Active material: LFP | 1/Area Ratio$_{LFP}$ Equation 2 | Total carbon content (wt%) Equation 3 |
|---|---|---|
| Example 1 | 0.72 | 1.45 |
| Comparative Example 1 | 0.13 | 1.35 |

| | | |
|---|---|---|
| Comparative Example 2 | 0.16 | 1.41 |
| Comparative Example 3 | 0.08 | 1.46 |

As shown in Table 1 and FIG. 1 below, In the case of Example 1, it was confirmed that the Raman spectrum analysis variables showed different trends compared to Comparative Examples 1 to 3. Specifically, the total carbon content analyzed in Example 1 was 1.45 % by weight, which was almost similar to the total carbon content analyzed in Comparative Example 3, which was 1.46 % by weight. The result of Equation 2, which reflects the 1/Area Ratio$_{LFP}$ item obtained from the results of Raman spectrum analysis, was 0.72 for Example 1, satisfying 0.45 or higher, but for Comparative Example 3, the value was 0.08, showing a value far below 0.45.

In addition, when compared with Comparative Example 1, which has undergone a wet recycling process commonly practiced in the technical field to which the present invention belongs, or Comparative Example 2, which is a fresh cathode active material, in the case of Example 1 according to the present invention, it was confirmed that the value was 0.72, which satisfies more than 0.45, while in the case of Comparative Example 1, the value was 0.13, and in the case of Comparative Example 2, the value was 0.16, which is still far below 0.45.

[Test Example III: Selection of carbon coating quality measurement indicators]

Equation 1 below was calculated from the 1/Area Ratio$_{LFP}$ item (Equation 2) and the total carbon content (Equation 3) in Table 1, and the results are shown in the carbon content × Area Ratio$_{LFP}$ item in Table 2 below.

$$[Equation\ 1]$$

$$Carbon\ content\ \times\ Area\ Ratio_{LFP}$$

[Table 2]

| Active material: LFP | 1/ (Area Ratio$_{LFP}$) Equation 2 | Total carbon content (wt%) Equation 3 | Carbon content × (Area Ratio$_{LFP}$) Equation 1 |
|---|---|---|---|
| Example 1 | 0.72 | 1.45 | 2.01 |
| Comparative Example 1 | 0.13 | 1.35 | 10.38 |
| Comparative Example 2 | 0.16 | 1.41 | 8.81 |
| Comparative Example 3 | 0.08 | 1.46 | 18.25 |

As shown in Table 2, the results calculated according to Equation 1 showed a tendency not to match the total carbon content calculated in Equation 3, and by adding the results of Raman spectrum analysis, it was confirmed that it may be used as an indicator to evaluate carbon coating quality more accurately. Specifically, the total carbon content analyzed in Example 1 was 1.45 % by weight, which was almost similar to the total carbon content analyzed in Comparative Example 3, which was 1.46 % by weight. The result of Equation 1, which reflects the 1/Area Ratio$_{LFP}$ item obtained from the results of Raman spectrum analysis, was 2.01 in Example 1, satisfying the value of 5 or less, but in Comparative Example 3, the value was 18.25, which was far more than 5.

In fact, even when compared with Comparative Example 1, which has undergone a wet recycling process commonly practiced in the technical field to which the present invention belongs, or Comparative Example 2, which is a fresh cathode active material, Example 1 according to the present invention exhibited 2.01, satisfying 5 or less, but in the case of Comparative Example 1, the value was 10.38, and in the case of Comparative Example 2, the value was 8.81, which still showed a value far exceeding 5.

In particular, for Comparative Example 3, which has different calcination temperature conditions, the value is 18.25, which exceeds 5. Based on this result, it is inferred that the calcination temperature conditions have a significant impact on the parameter Equation 1.

In addition, the electrochemical performance of the recycled or fresh cathode active materials obtained from Examples 1 and 2 and Comparative Examples 1 to 3 was measured through the following CHC cell evaluation.

[Test Example IV: CHC cell evaluation]

The electrochemical performance of the recycled or fresh cathode active materials obtained from Example 1 and Comparative Examples 1 to 3 was measured through the following CHC cell evaluation.

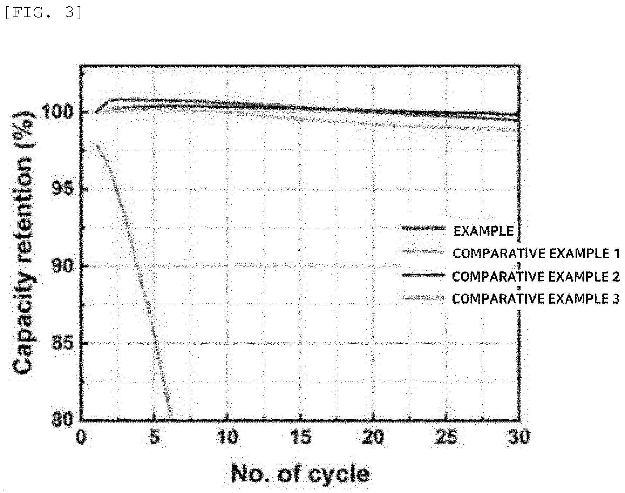

* CHC cell evaluation: 97.5 % by weight of the recycled cathode active material, 1 % by weight of carbon black as a conductive material, and 1.5 % by weight of PVdF as a binder were prepared and mixed with LFP to obtain slurry. Then, aluminum foil was coated with the slurry to manufacture a cathode, and then a cell (coin half cell, CHC) was manufactured. Then, voltage was set to 2.5 to 3.7 V, charging and discharging was performed at 0.1C/0.1C, and electrochemical performance (charge capacity, discharge capacity and efficiency) was evaluated under the condition including ethylene carbonate (EC) and ethyl methyl carbonate (EMC) in a weight ratio of 3:7 and other additives as an electrolyte solution. The results are shown in Table 3 below and FIG. 3 below.

[Table 3]

|  | Charge capacity | Discharge capacity | Efficiency (%) |
|---|---|---|---|
| Example 1 | 162.2 | 158.7 | 97.6 |
| Comparative Example 1 | 159.2 | 156.3 | 98.2 |
| Comparative Example 2 | 160.0 | 157.0 | 98.1 |
| Comparative Example 3 | 157.5 | 154.7 | 98.2 |

Table 3 and FIG. 3 below show the results of coin cell evaluation for each of the recycled or fresh cathode active materials obtained in Example 1 and Comparative Examples 1 to 3. As shown in Table 3 and FIG. 3 below, comparative Examples 1 to 3, it was confirmed that the recycled cathode active material (Example 1) according to the present invention had excellent charge capacity.

* Capacity retention rate measurement at high temperature (45 °C): Formation of each mono-cell manufactured using the recycled or fresh cathode active materials obtained from Example 1 and Comparative Examples 1 to 3 was performed at a rate of 0.1 C, and gas inside the cell was removed (degas process). Afterwards, 4.2 V, 1 C, 0.05 C cut-off CC/CV charging and 2.5 V, 0.5 C CC discharging were performed 200 times each at high temperature (45 °C). The discharge capacity when performed once and the discharge capacity after 200 times were measured using a PNE-0506 charging and discharging device (manufacturer: PNE Solution Co., Ltd., 5 V, 6 A). The discharge capacity when performed once was set as an initial capacity. Afterwards, the capacity retention rate was calculated by comparing the 200th discharge capacity with the initial capacity (100 %) using Equation 4 below.

Capacity retention rate (%) = (Discharge capacity after high-temperature cycling/Initial discharge capacity) $\times$ 100 [Equation 4]

The measurement results showed that as the number of cycles increased, the recycled cathode active materials of Examples 1 and 2 had higher capacity retention rates compared to Comparative Examples 1 to 3.

* Measurement of resistance increase at high temperature (45 °C): Formation of each mono-cell manufactured using the recycled or fresh cathode active materials obtained from Example 1 and Comparative Examples 1 to 3 was performed at a rate of 0.1 C, and gas inside the cell was removed (degas process). After the degassed lithium secondary battery was transferred to a charging and discharging device at room temperature (25 °C), the battery was charged at 0.33 C rate up to 4.2 V under constant current/constant voltage conditions and charged with 0.05 C cut off, and then discharged at 0.33 C and 2.5 V. The SOC (state of charge) was set to 50 % based on the discharge capacity after each charge/discharge cycle of 3 times. At this time, the DC internal resistance was measured through the voltage drop that appeared when a discharge pulse was given at 2.5 C for 10 seconds using a PNE-0506 charging and discharging device (manufacturer: PNE Solution Co., Ltd., 5 V, 6 A), and the resistance at this time was set as an initial resistance.

Afterwards, 4.2 V, 1 C, 0.05 C cut-off CC/CV charging and 2.5 V, 0.5 C CC discharging were performed 200 times each at high temperature (45 °C). The lithium secondary battery was moved to a charging and discharging device at room temperature (25 °C), and then the SOC (state of charge) was adjusted to 50 %. Through the voltage drop appeared when a discharge pulse was applied at 2.5 C for 10 seconds, the DC internal resistance was measured using a PNE-0506 charging and discharging device (manufacturer: PNE Solution Co., Ltd., 5 V, 6 A). The obtained results were compared with the initial resistance (0 %) and the resistance increase rate (%) was calculated according to Equation 5.

Resistance increase rate (%) = {(Resistance after high-temperature cycle - Initial resistance) / Initial resistance} $\times$ 100 [Equation 5]

The measurement results showed that as the number of cycles increased, the recycled cathode active materials of Examples 1 and 2 showed a higher resistance increase rate than Comparative Examples 1 to 3.

**Claims**

1. A cathode active material having a carbon coating layer and an olivine structure compound and satisfying Equations 1, 2, and 3 below.

$$\text{[Equation 1]}$$

$$0 < \text{carbon content} \times \text{Area Ratio}_{LFP} \leq 5$$

$$\text{[Equation 2]}$$

$$0.45 \leq 1/\text{Area Ratio}_{LFP} \leq 1$$

$$\text{[Equation 3]}$$

$$1.3 \leq \text{carbon content} \leq 1.5,$$

wherein the carbon content is a total amount (wt%) of carbon measured by a carbon content analysis device, and Area Ratio$_{LFP}$ corresponds to an intensity of a Raman peak corresponding to the olivine structure compound among intensities of all Raman peaks observed in a Raman spectrum.

2. The cathode active material according to claim 1, wherein the cathode active material is a recycled cathode active material.

3. The cathode active material according to claim 1, wherein the cathode active material is a single particle.

4. The cathode active material according to claim 1, wherein the olivine structure compound is represented by Chemical Formula 1 below.

[Chemical Formula 1]   $Li_{1+a}Fe_{1-b}M_b(PO_{4-c})X_c$,

wherein M comprises one or more elements selected from the group consisting of Al, Mg, Ni, Co, Mn, Ti, Ga, Cu, V, Nb, Zr, Ce, In, Zn, and Y; X comprises one or more elements selected from the group consisting of F, S, and N; and a, b, c are $-0.5 \leq a \leq 0.5$, $0 \leq b \leq 0.5$, $0 \leq c \leq 0.1$, respectively.

5. The cathode active material according to claim 4, wherein the cathode active material having the olivine structure compound comprises lithium iron phosphate.

6. A method of recycling a cathode active material, comprising:

heat-treating a waste cathode in which a cathode active material layer comprising a cathode active material having an olivine structure compound is applied onto a current collector to desorb the cathode active material from the current collector;
coating a surface of the desorbed cathode active material; and
milling the coated cathode active material,
wherein the coating step comprises applying a coating agent to the desorbed cathode active material, performing preliminary milling, and performing spray drying; and calcining the spray-dried cathode active material at 750 to 1200 °C under a reducing atmosphere.

7. The method according to claim 6, wherein the desorption step is performed by heating at a temperature of 300 to 650 °C under an oxidizing atmosphere.

8. The method according to claim 6, wherein the desorption step is performed by increasing temperature at a heating rate of 1 to 10 °C/min to reach the heat treatment temperature, and is performed for 10 minutes to 5 hours.

9. The method according to claim 6, wherein the coating agent comprises one or more of a metal, an organic metal, and a carbon component.

10. The method according to claim 6, wherein, in the coating step, the calcination is performed for 1 to 24 hours.

11. The method according to claim 6, wherein, in the coating step, the preliminary milling is performed using a ball mill, a high-energy ball mill, a vibrating mill, or a roll-mill.

12. The method according to claim 6, wherein the mill step is performed using a jet mill.

13. The method according to claim 6, wherein the olivine structure compound is represented by Chemical Formula 1 below.

[Chemical Formula 1] $Li_{1+a}Fe_{1-b}M_b(PO_{4-c})X_c,$

wherein M comprises one or more elements selected from the group consisting of Al, Mg, Ni, Co, Mn, Ti, Ga, Cu, V, Nb, Zr, Ce, In, Zn, and Y; X comprises one or more elements selected from the group consisting of F, S, and N; and a, b, c are $-0.5 \leq a \leq 0.5$, $0 \leq b \leq 0.5$, $0 \leq c \leq 0.1$, respectively.

14. A secondary battery comprising the cathode active material according to any one of claims 1 to 5.

[FIG. 1]

[FIG. 2]

[FIG. 3]

## INTERNATIONAL SEARCH REPORT

| International application No. |
| --- |
| **PCT/KR2025/000308** |

| A. | CLASSIFICATION OF SUBJECT MATTER |
| --- | --- |

**H01M 4/36**(2006.01)i; **H01M 4/58**(2010.01)i; **H01M 10/54**(2006.01)i; **H01M 10/052**(2010.01)i; **G01N 21/65**(2006.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); H01M 10/052(2010.01); H01M 4/505(2010.01); H01M 4/525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), Google & keywords: 올리빈(olivine), 리튬인산철(LiFePO4, lithium iron phosphate), 양극(cathode), 재생(recycle), 열처리(heat treatment), 코팅(coating), 밀링(milling), 분무건조(spray-drying)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | ZOU, Y. et al. Large-scale direct regeneration of LiFePO 4@C based on spray drying. Industrial Chemistry & Materials. 2023, vol. 1, pp. 254-261. <br> See abstract; pages 225 and 259; figure 1; and table 1. | 1-14 |
| Y | KR 10-2021-0076919 A (BTR (TIANJIN ) NANO MATERIAL MANUFACTURE CO., LTD.) 24 June 2021 (2021-06-24) <br> See claims 1-16. | 1-14 |
| A | KR 10-1929961 B1 (ECOPRO BM CO., LTD.) 18 December 2018 (2018-12-18) <br> See claims 1 and 5-9. | 1-14 |
| A | KR 10-2021-0059763 A (BTR (TIANJIN ) NANO MATERIAL MANUFACTURE CO., LTD.) 25 May 2021 (2021-05-25) <br> See entire document. | 1-14 |
| A | KR 10-2023-0038844 A (LG ENERGY SOLUTION, LTD.) 21 March 2023 (2023-03-21) <br> See entire document. | 1-14 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **09 April 2025** | **10 April 2025** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2025/000308** |

| Patent document cited in search report | | | Publication date (day/month/year) | Patent family member(s) | | | Publication date (day/month/year) |
| --- | --- | --- | --- | --- | --- | --- | --- |
| KR | 10-2021-0076919 | A | 24 June 2021 | CN | 113036253 | A | 25 June 2021 |
| | | | | CN | 113036253 | B | 13 January 2023 |
| | | | | EP | 3863106 | A1 | 11 August 2021 |
| | | | | JP | 2022-517160 | A | 07 March 2022 |
| | | | | JP | 7161606 | B2 | 26 October 2022 |
| | | | | US | 12021206 | B2 | 25 June 2024 |
| | | | | US | 2022-0102773 | A1 | 31 March 2022 |
| | | | | WO | 2021-114747 | A1 | 17 June 2021 |
| KR | 10-1929961 | B1 | 18 December 2018 | KR | 10-2017-0033787 | A | 27 March 2017 |
| KR | 10-2021-0059763 | A | 25 May 2021 | CN | 111799522 | A | 20 October 2020 |
| | | | | CN | 111799522 | B | 10 January 2023 |
| | | | | EP | 3832782 | A1 | 09 June 2021 |
| | | | | JP | 2021-535580 | A | 16 December 2021 |
| | | | | JP | 7220360 | B2 | 10 February 2023 |
| | | | | US | 2022-0115718 | A1 | 14 April 2022 |
| | | | | WO | 2020-206884 | A1 | 15 October 2020 |
| KR | 10-2023-0038844 | A | 21 March 2023 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240025873
- KR 1020250001944
- JP 2024503575 A